# EUROPÄISCHE PATENTANMELDUNG

(11) **EP 1 006 275 A1**
(43) Veröffentlichungstag der Anmeldung: **07.06.2000**
(21) Anmeldenummer: 99122010.4
(22) Anmeldetag: 11.11.1999
(51) Int. Cl.: F02M 35/14, B60K 13/02

(54) **Kraftfahrzeug-Aggregateraum mit einem Dämpferfilter**

(30) Priorität: 04.12.1998 DE 19856044
(71) Anmelder: Volkswagen Aktiengesellschaft, 38436 Wolfsburg (DE)
(72) Erfinder: Bauer, Andreas, 38442 Wolfsburg (DE); Dau, Wolfraum, 38444 Wolfsburg (DE); Bock, Michael, Dipl.-Ing., 38126 Braunschweig (DE); Lange, Wolfgang, Dipl.-Ing., 38448 Wolfsburg (DE); Herr, Stefan, 38118 Braunschweig (DE); Schlaf, Dag-Arnulf, Dipl.-Ing., 38518 Gifhorn (DE)

(57) **Zusammenfassung**

Die Erfindung betrifft einen Kraftfahrzeug-Aggregateraum mit einem Dämpferfilter (100), welches eine Filterpatrone (5) aufnimmt. Hierbei ist das Dämpferfilter (100) als wenigstens zweiteiliges Trägermodul (1, 2) mit Aufnahme- und Befestigungsvorrichtungen (8, 40) für elektrische (7, 29) und/oder mechanische Bauteile (31, 37) ausgebildet.

## Beschreibung

Die Erfindung betrifft einen Kraftfahrzeug-Aggregateraum mit einem Dämpferfilter, welches eine Filterpatrone aufnimmt, gemäß dem Oberbegriff des Anspruchs 1.

Aus der DE 43 41 355 A1 ist ein Kraftfahrzeug-Aggregateraum bekannt, welcher zwischen einer Stirnwand und einer mit Abstand vor dieser angeordnete Querwand einen staudruckbelüfteten Teilraum zur Aufnahme von Zusatzaggregaten aufweist. Hierbei steht der Teilraum über ein seitliches, im Bereich eines Radhauses angeordnetes kastenartiges Modul zur Aufnahme elektrischer Komponenten in Strömungsverbindung mit einem frontseitigen Lufteintritt, während Luftaustrittsöffnungen an zumindest einem Radhaus vorgesehen sind. Ein Scheibenwaschbehälter dient als Trägermodul für eine Batterie und mehrere elektrische Steuergeräte. Ferner verdeckt dieses Trägermodul ein chaotisch aussehendes Wirrwarr aus Schläuchen, Kabeln und diversen Subaggregaten über einem Getriebe.

Der vorliegenden Erfindung liegt die Aufgabe zugrunde, einen Kraftfahrzeug-Aggregateraum der obengenannten Art zur Verfügung zu stellen, welcher eine verbesserte Kabelführung sowie eine bessere Integration von Komponenten im Kraftfahrzeug-Aggregateraum erzielt.

Diese Aufgabe wird erfindungsgemäß durch einen Kraftfahrzeug-Aggregateraum der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß das Dämpferfilter als wenigstens zweiteiliges Trägermodul mit Aufnahme- und Befestigungsvorrichtungen für elektrische und/oder mechanische Bauteile ausgebildet ist.

Dies hat den Vorteil, daß beispielsweise eine Batterie nebst elektrischen Steuergeräten im Dämpferfilter angeordnet und damit thermisch von einer warmen Motorraumluft abgeschottet sind. Eine Batterielebensdauer ist dadurch erhöht. Ferner sind die elektrischen Steuergeräte vor Überhitzung geschützt. Schließlich wird zusätzlich ein ansonsten ungenutzter Raum im Dämpferfilter genutzt, so daß eine kompaktere Anordnung der Komponenten im Kraftfahrzeug-Aggregateraum erzielt wird.

Um alle Räume und Ecken in dem Kraftfahrzeug-Aggregateraum oberhalb eines Getriebes als Bauraum zu nutzen ist wenigstens ein Teil des Dämpferfilters als Blasteil ausgebildet. Dies erzielt ferner ein großes Dämpfervolumen, was in vorteilhafter Weise akustisch Ansauggeräusche einer Brennkraftmaschine dämpft bzw. minimiert. Um filigrane Strukturen des Dämpferfilters herstellen zu können ist alternativ wenigstens ein Teil des Dämpferfilters als Spritzgußteil ausgebildet. Hierdurch sind Wandungen steifer und somit akustisch stabiler, so dass verschiedenste Einzelteile in großer Zahl in dem Trägermodul integrierbar sind.

Steife und akustisch stabile Wandungen des Dämpferfilters erzielt man dadurch, dass Dämpferfilterflächen wenigstens teilweise bombiert, d.h. als gekrümmte Flächen, ausgebildet sind. Schall kann nur sehr begrenzt von innen nach außen dringen.

In einer bevorzugten Ausführungsform umfaßt der Dämpferfilter einen Deckel als erstes Teil, welcher auf eine Öffnung in einem Gehäuse des Dämpferfilters als zweites Teil paßt und diese Öffnung dicht verschließt. Hierbei ergibt sich in vorteilhafter Weise eine einfache Montage aller innerhalb des Dämpferfilters angeordneter Komponenten durch die Öffnung, wobei nach fertiggestellter Montage der Deckel das Gehäuse zum Ausbilden des abgeschlossenen Dämpfervolumens dichtend verschließt.

Zum Haltern der Filterpatrone in dem Dämpferfilter ist in vorteilhafter Weise in der Öffnung des Gehäuses des Dämpferfilters ein Flansch ausgebildet.

Zum Verbinden mit einem Ansaugschlauch einer Saugseite einer in dem Kraftfahrzeug-Aggregateraum angeordneten Brennkraftmaschine weist der Deckel des Dämpferfilters in vorteilhafter Weise einen Stutzen auf.

Zum Einklemmen der Filterpatrone ist im Bereich der Öffnung zusätzlich ein Gegenflansch auf das Gehäuse des Dämpferfilters aufgepfropft.

Damit das Trägermodul auf einer Halterung im Kraftfahrzeug-Aggregateraum nicht hin- und herwackelt ist oben am Gegenflansch ein Rundlager angeordnet, welches mit einem Federbeindom im Kraftfahrzeug-Aggregateraum verbunden ist. Auf diese Weise werden motorseitige Anregungen, beispielsweise über den Ansaugschlauch, direkt in den Federbeindom geleitet, so daß auf das Trägermodul und die in diesem integrierten Komponenten im wesentlichen keine Schwingungen übertragen werden.

Einen einfachen Einbau des Dämpferfilters in vorhandene Strukturen des Kraftfahrzeug-Aggregateraumes erzielt man dadurch, daß das Trägermodul auf einer konventionellen Batteriehalterung angeordnet ist.

Zum Verbessern akustischer Eigenschaften ist das Trägermodul auf der Batteriehalterung mittels einer Gummilagerung befestigt.

Zum Herstellen eines leckfreien Kabeldurchganges, insbesondere für Batteriekabel, in den Dämpferfilter hinein bzw. aus diesem heraus, ohne daß Luftschall nach außen dringen kann, ist eine Buchse zum Befestigen in einer Öffnung einer Wandung des Dämpferfilters vorgesehen, wobei die Buchse zwei Halbschalen umfaßt, die zwischen sich einen drei- oder mehrteiligen Gummiblock einklammern, welcher Kabeldurchführungsöffnungen aufweist.

Für eine einfache und funktionssichere Montage der dichten Kabeldurchführung ist eine Schraube zum Zusammenhalten der Halbschalen derart vorgesehen, daß beim Anziehen der Schraube der Gummiblock zusammengedrückt ist. Dies erzielt ein für eine Abdichtung ausreichendes Anpressen des Gummiblockes an durch diese geführte Kabel.

Zum Arretieren der Buchse in der Öffnung weist diese wenigstens ein Federelement derart auf, daß sich dieses nach Einschieben der Buchse in die Öffnung des Trägermoduls derart verformt und an einem Umfang der Öffnung abstützt, daß ein dem Einschieben entgegengesetztes Herausziehen der Buchse aus der Öffnung blockiert ist.

Zum Abdichten der Buchse gegen die Wandung des Trägermoduls ist um den in der Öffnung der Wandung des Trägermoduls umlaufenden, äußeren Rand der Buchse herum wenigstens eine Dichtung, insbesondere in Form eines Dichtringes, angeordnet.

Zur einfachen und sicheren Aufnahme von Bauteilen innerhalb des Dämpferfilters umfassen die Aufnahme- und Befestigungsvorrichtungen für ein jeweiliges Bauteil eine der Kontur des Bauteils entsprechende Ausnehmung in einer Wandung des Dämpferfilters mit randseitig an diesen Ausnehmungen ausgebildeten Clip- bzw. Rastnasen.

Zum Vereinfachen einer Rohrverlegung für die Ansaugung von Kaltluft bzw. Warmluft innerhalb des Kraftfahrzeug-Aggregateraumes ist in dem Dämpferfilter eine Luftansaugstrecke für Kaltluft und/oder eine Luftansaugstrecke für Warmluft angeordnet.

Eine Vereinfachung eines Verlaufes einer Klimaleitung durch den Kraftfahrzeug-Aggregateraum wird dadurch erzielt, daß eine am Dämpferfilter außenseitig angeordnete Befestigungsvorrichtung für eine Klimaleitung vorgesehen ist.

Dadurch, daß der Dämpferfilter mit einer Trennfuge auf etwa halber Höhe desselben ausgebildet ist, welche den Dämpferfilter in eine Oberschale und eine Unterschale teilt, ergibt sich eine Anordnung, welche besonders bevorzugt im Spritzguß herstellbar ist, wodurch filigranere Strukturen mit steiferen und akustisch stabileren Wänden ausgebildet werden können, wobei diverse Einzelteile des Dämpferfilters bereits beim Spritzguß integral ausbildbar sind.

Zum Absetzten der Befestigung der Filterpatrone von der Trennfuge des Dämpferfilter sind im Oberteil des Dämpferfilter ein zusätzlicher Flansch sowie ein zusätzlicher Befestigungskorb für die Filterpatrone vorgesehen. Durch die Trennung der Befestigungsvorrichtung für die Filterpatrone von der Trennfuge ist der vorhandene Bauraum im Dämpferfilter über dem Getriebe besser ausgenutzt. Die Trennfuge ist in ihrer Ausgestaltung nicht mehr von den geometrischen Abmessungen der Filterpatrone abhängig und frei gestaltbar. Insbesondere kann die Trennfuge in alle Winkel und Ecken geführt werden. Das Dämpfervolumen wird optimal groß.

Für eine luftdichte und schalldichte Verbindung der Schalen des Dämpferfilters ist in der Trennfuge des Dämpferfilters ein Ring angeordnet, welcher die Oberschale und die Unterschale aneinander fixiert und gegeneinander spaltfrei zur Umgebung abdichtet. Hierbei ist der Ring beispielsweise einstückig mit der Oberschale oder der Unterschale ausgebildet.

Zur einfachen Montage von Bauteilen innerhalb des Dämpferfilters ohne Anpassung von entsprechenden Befestigungsvorrichtungen an ggf. bombierte Innenflächen des Dämpferfilters ist am Ring eine sich in einen Innenraum des Dämpferfilters erstreckender Flansch ausgebildet, welcher eine Montageplatte trägt. Hierbei sind zweckmäßigerweise die mit Aufnahme- und Befestigungsvorrichtungen wenigstens teilweise auf der Montageplatte ausgebildet. Diese umfassen beispielsweise an der Montageplatte, insbesondere einstückig mit dieser, angeordnete Querspanten und/oder Längsspanten. Zur Schall- und Luftzirkulation sind die Querspanten und/oder Längsspanten wenigstens teilweise gelocht ausgebildet.

Dadurch, daß auf der Montageplatte ein Kasten mit durchgehenden Wänden zur Aufnahme einer Batterie angeordnet ist, wird die Batterie von der Luft im Dämpferfilter hermetisch abgeschottet. Gleichzeitig dient der Kasten als Schutz des Kraftfahrzeug-Aggregateraumes vor aus der Batterie ggf. austretender Schwefelsäure. Hierzu ist der Kasten bodenseitig von einem Halteblech für die Batterie abgeschlossen und weist dort einen entsprechenden Ablauf auf.

Zum Herstellen einer Kabeldurchführung durch die Trennfuge ohne die Notwendigkeit einer Öffnung in einer Wandung der Gehäuseteile des Dämpferfilters ist in der Trennfuge zusätzlich ein Gummiblock mit Durchgangsbohrungen in einer Kerbe der Trennfuge angeordnet.

Um einen Mechanismus zum Öffnen und Schließen der Schalen des Dämpferfilters gut zugänglich im Oberen Bereich des Dämpferfilters anzuordnen ist seitlich am Dämpferfilters die Trennfuge übergreifend wenigstens ein Spannband vorgesehen, welches die Oberschale und die Unterschale zusammenhält. Hierbei sind zweckmäßigerweise an der Oberschale und an der Unterschale entsprechende Befestigungselemente für die Spannbänder, insbesondere einstückig, angeordnet.

Zweckmäßigerweise umfassen die Aufnahme- und Befestigungsvorrichtungen eine Batteriehalterung, eine Befestigungsvorrichtung für eine Klimaleitung, eine Montageplatte für eine Batterie, einen Kasten für eine Batterie, Querspanten und/oder Längsspanten.

Die elektrischen Bauteile umfassen beispielsweise ein Motorsteuergerät, ein Kühler-Lüfter-Steuergerät, ein Getriebesteuergerät und/oder einen Sicherungskasten, während die mechanischen Bauteile beispielsweise eine Ansaugstrecke für Kaltluft, eine Ansaugstrecke für Warmluft, einen Mechanismus für eine Warmluftansaugung und/oder eine Klimaleitung umfassen.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine erste bevorzugte Ausführungsform eines Dämpferfilters für einen erfindungsgemäßen Kraftfahrzeug-Aggregateraum in einer Draufsicht,
- Fig. 2: eine Schnittansicht entlang Linie B-B von Fig. 1,
- Fig. 3: eine Schnittansicht entlang Linie A-A von Fig. 2,
- Fig. 4: eine Schnittansicht entlang Linie C-C von Fig. 1,
- Fig. 5A und 5B: das Detail X von Fig. 2,
- Fig. 6: eine zweite bevorzugte Ausführungsform eines Dämpferfilters für einen erfindungsgemäßen Kraftfahrzeug-Aggregateraum in einem Querschnitt,
- Fig. 7: eine Draufsicht zu Figur 6,
- Fig. 8: eine Schnittansicht entlang Linie A-A von Fig. 6,
- Fig. 9: eine Schnittansicht entlang Linie B-B von Fig. 7,
- Fig. 10: eine vergrößerte Darstellung einer Trennfuge mit Kabeldurchführung,
- Fig. 11: die Kabeldurchführung von Fig. 10 in Aufsicht,
- Fig. 12: eine Explosionsdarstellung des Dämpferfilters von Fig. 6 und
- Fig. 13: eine weitere Explosionsdarstellung des Dämpferfilters von Fig. 6 aus einem anderen Blickrichtung.

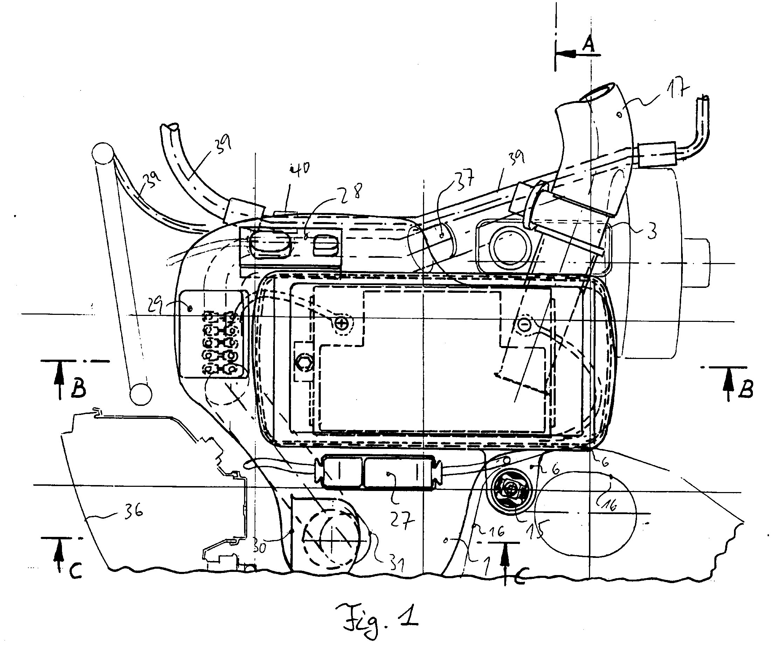

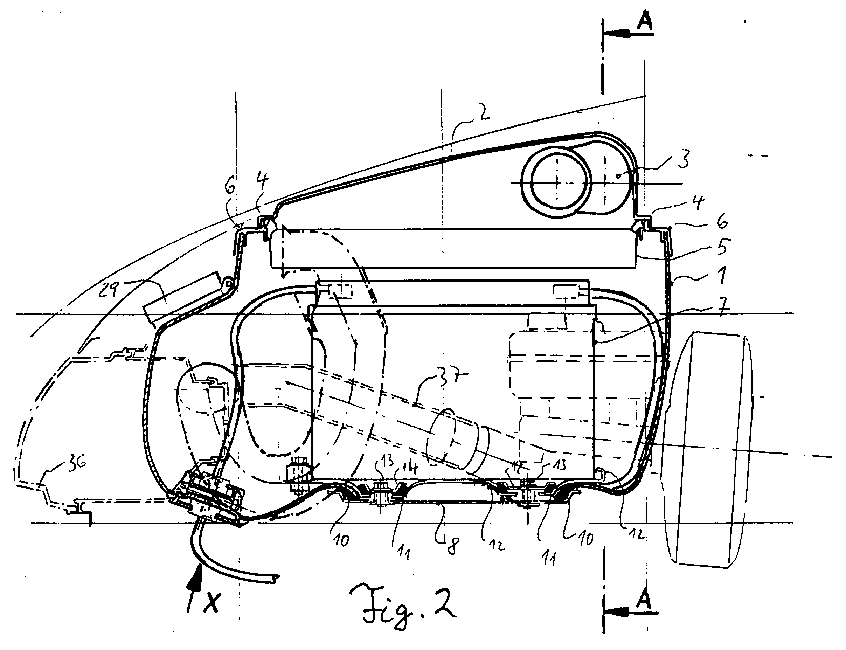

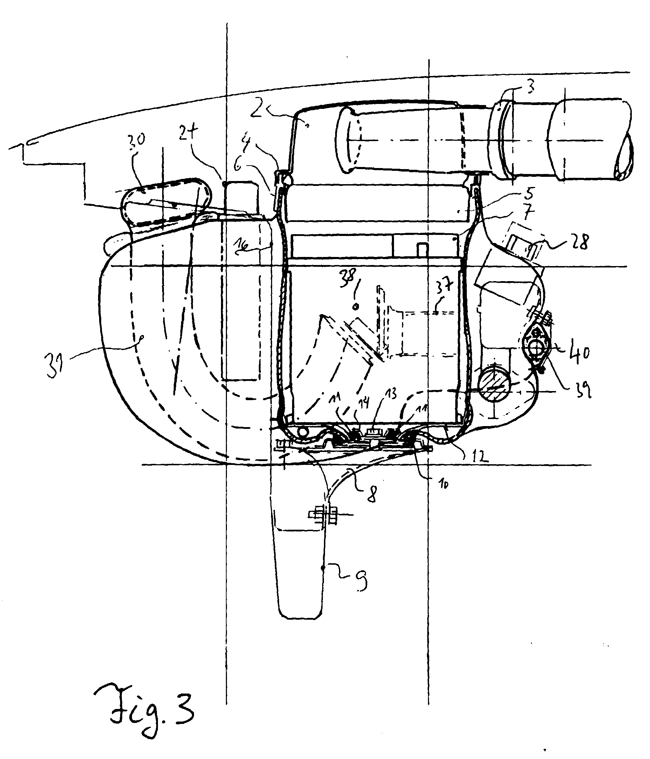

Bei der in Fig. 1 bis 5 dargestellten ersten bevorzugten Ausführungsform eines Dämpferfilters für einen erfindungsgemäßen Kraftfahrzeug-Aggregateraum ist eine obere Kuppe von einem Blasteil bzw. Dämpferfiltergehäuse 1 abgeschnitten, um eine Batterie 7, elektrische Steuergeräte 27, 28, eine Filterpatron 5 usw. in das beispielsweise als Blasteil ausgeführte geblasene Dämpferfilter 100 einzubauen. Das dabei entstehende Loch wird durch einen Deckel 2 verschlossen, der hier beispielhaft einem serienmäßigen Oberteil eines herkömmlichen Dämpferfilters gleicht. Dieser Deckel 2 ist beispielsweise als Spritzteil ausgeführt. Oben auf dem Deckel 2 ist ein Anschluß für einen Heißfilmmesser 3 und unten ist ein Flansch 4 zum Einklemmen der Filterpatrone 5 vorgesehen. Zum Einklemmen der Filterpatrone 5 ist auf dem Blasteil bzw. Dämpferfiltergehäuse 1 ferner ein Gegenflansch 6 aufgepfropft, der dem Flansch eines serienmäßigen Unterteiles ähnlich ist.

Erfindungsgemäß ist eine Lagerung des Dämpferfilters (100) zusammen mit der Batterie 7 aus akustischen Gründen in Gummi ausgeführt. Das als Trägermodul 1, 2 ausgebildete Dämpferfilter 100 steht auf einer konventionellen Batteriehalterung 8, die an einem Längsträger 9 (Rohbau) festgeschraubt ist und die eine Gummilagerung 10, 11 trägt. Die Gummilagerung 10, 11 setzt sich aus einem unteren Teil 10 und einem oberen Teil 11 zusammen, die das Dämpferfiltergehäuse 1 mit einem Halteblech 12 für die Batterie 7 mittels einer Sechskantschraube 13 und einer Scheibe 14 zusammen klemmen. Damit das Trägermodul 1, 2 unten auf der Halterung 13, 14 nicht hin- und herkippelt, ist oben am aufgepfropften Gegenflansch 6 ein Rundlager 15 vorgesehen, welches oben mit einem Federbeindom 16 verbunden ist. Auf diese Weise werden motorseitige Schwingungsanregungen von einem Ansaugschlauch 17 direkt in den Federbeindom 16 geleitet, so daß auf das Trägermodul 1, 2 und damit auf die Batterie 7 bzw. sonstige im bzw. am Dämpferfilter 100 angeordnete Komponenten im wesentlichen keine großen Schwingungen übertragen.

Das Dämpferfilter 100 ist als Blasteil ausgeführt, was den zusätzlichen Vorteil hat, daß alle Räume und Ecken über einem Getriebe im Kraftfahrzeug-Aggregateraum als Bauraum ausgenutzt werden und gleichzzeitig ein maximal großes Dämpferfiltervolumen geschaffen wird. Ein großes Dämpferfiltervolumen minimiert akustisch die Ansauggeräusche eines Motors. Je größer das Dämpferfiltervolumen ist, desto besser ist die akustische Dämpfung. Außerdem sind bevorzugt alle Dämpferfilterflächen bombiert ausgeführt, d.h. alle Flächen sind in sich gekrümmt. Die Flächen werden dadurch steif und akustisch stabil. Der Schall kann nicht von innen nach außen dringen.

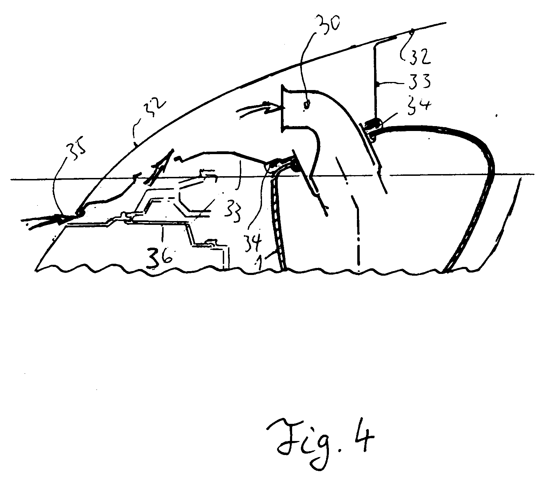

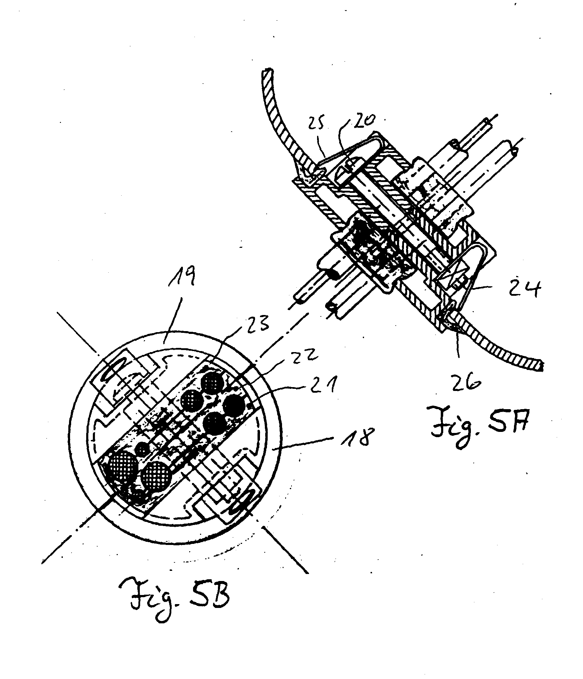

Die erfindungsgemäße Kabeldurchführung mit einem entsprechenden Kabeldurchgang, insbesondere für Kabel 41 der Batterie 7, in das Dämpferfilter 100 hinein bzw. hinaus ist aus Fig. 2 (vgl. Einzelheit X) sowie aus Fig. 5A und 5B ersichtlich. Die Kabel 41 sind leckfrei durch die Dämpferfilterwand hindurch geführt, wodurch ein Luftschall nicht nach außen dringt (Einzelheit X in Fig. 2). Zu diesem Zweck ist in die Dämpferfilterwand ein kreisrundes Loch geschnitten, in das eine Buchse 18, 19 gesteckt ist, in die die Kabel 41 mittels eines Gummiblocks 21, 22, 23 eingeklemmt sind. Die Buchse besteht aus zwei Halbschalen 18 und 19, die durch eine lange Schraube 20 zusammengehalten sind. In die Buchse 18, 19 ist der dreiteilige oder mehrteilige Gummiblock 21, 22, 23 hineingelegt, der die Kabel 41 umfaßt und der beim Anziehen der Schraube 20 über die beiden Halbschalen 18, 19 zusammengedrückt wird. Diese Buchse 18, 19 (mit Kabeln 41) wird in das kreisrunde Loch der Dämpferfilterwand gesteckt. Aufgrund von zwei Federelementen 24, 25 läßt sich die Buchse 18, 19 danach nicht wieder herausziehen, ähnlich einer Autoradio-Befestigung. Damit zwischen kreisrundem Loch und der Buchse 18, 19 kein Luftspalt entsteht, ist zusätzlich ein Dichtring 26 vorgesehen.

Analog zur Befestigung der Buchse 18, 19 mit Kabel 41 sind beispielsweise diverse Steuergeräte in die Dämpferfilterwand eingeclipst, wie beispielsweise ein Motorsteuergerät 27, ein Kühler-Lüfter-Steuergerät 28, ein Sicherungskasten 29 und mehr. Die entsprechenden Löcher im Dämpferfiltergehäuse 1 sind hierbei rechteckig ausgeführt. Kabel und Stecker sind zwecks guter Zugänglichkeit bevorzugt außen entlang angeordnet.

Erfindungsgemäß ist ferner eine Luftansaugstrecke 31 bzw. 37 in das Dämpferfilter 100 integriert. Die Luftansaugstrecke 31 hat den Zweck, die Ansaugfrequenz an einem Ansaugstutzen 30 zu beeinflussen. Oft sind dabei zusätzlich eine oder mehrere Ausstülpungen, sogn. Resonatoren, und eine komplizierte Verlegung erforderlich, was einen schlechten Eindruck von der Qualität eines Fahrzeuges beim Öffnen einer Motorhaube 32 hinterläßt. Bei der erfindungsgemäßen Anordnung mit einem viel größer als erforderlichen Dämpferfiltervolumen ist diese Ansaugstrecke 31 mit Resonatoren innerhalb des Dämpferfilters 100 verlegt.

Wie insbesondere aus Fig. 4 ersichtlich wird Kaltluft durch einen Spalt 35 zwischen einem Scheinwerfer 36 und der Haube 32 angesaugt und gelangt in den Raum zwischen einem Haubeninnenblech 33 und einem Haubenaußenblech. Der Ansaugstutzen 30 ragt bei geschlossener Haube 32 in diesen Raum durch ein Loch hinein. Um keine Warmluft vom Motorraum anzusaugen, ist zwischen Haubeninnenblech 33 und der Dämpferfilterwand 1 eine Dichtung 34 vorgesehen. Damit im Winter die Batterie 7 nicht allzu sehr abkühlt, ist noch eine Warmluftansaugung 37 zu einem nicht dargestellten Abgaskrümmer vorgesehen, die bei Bedarf automatisch warme Luft hinzumischt. Ein entsprechender Mechanismus 38 hierfür ist ebenfalls in das Dämpferfilter integriert.

Ferner ist erfindungsgemäß eine Befestigungsvorrichtung 40 für eine Klimaleitung 39 mitten im Motorraum vorgesehen, wie insbesondere aus Fig. 1 ersichtlich. Herkömmlicherweise ist eine teils sehr schwierige Verlegung der Klimaleitung vorgesehen: Diese beginnt an einem Expansionsventil an einer Trennwandmitte und schlängelt sich von dieser Stelle aus über einen Längsträger hinweg zu einem Klimakompressor und Kondensator. Durch die erfindungsgemäß vorgesehene Befestigungsvorrichtung 40 vorn am Dämpferfilter 100 ist der Verlauf der Klimaleitung sehr vereinfacht. Die Anbindung erfolgt aus akustischen Gründen beispielsweise wieder in Gummi.

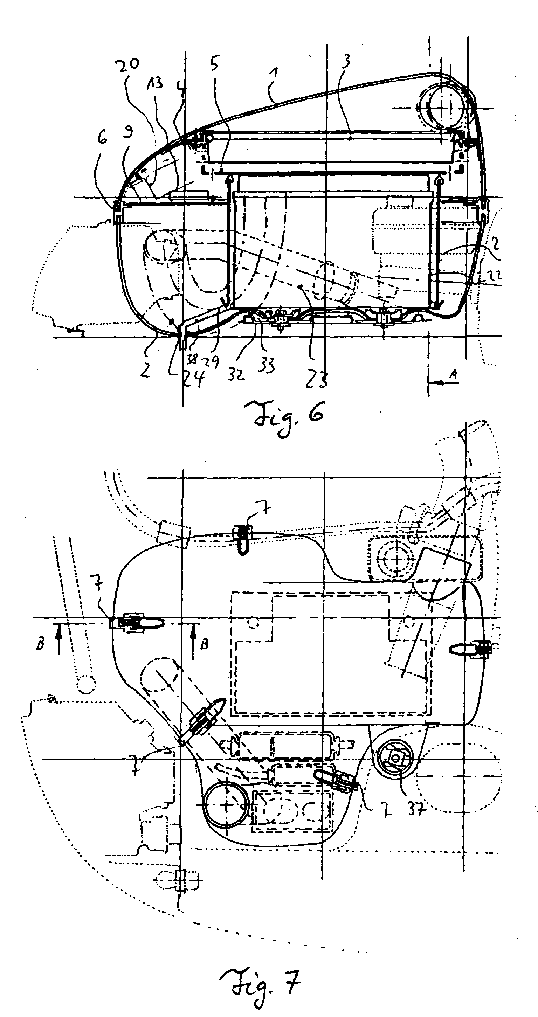

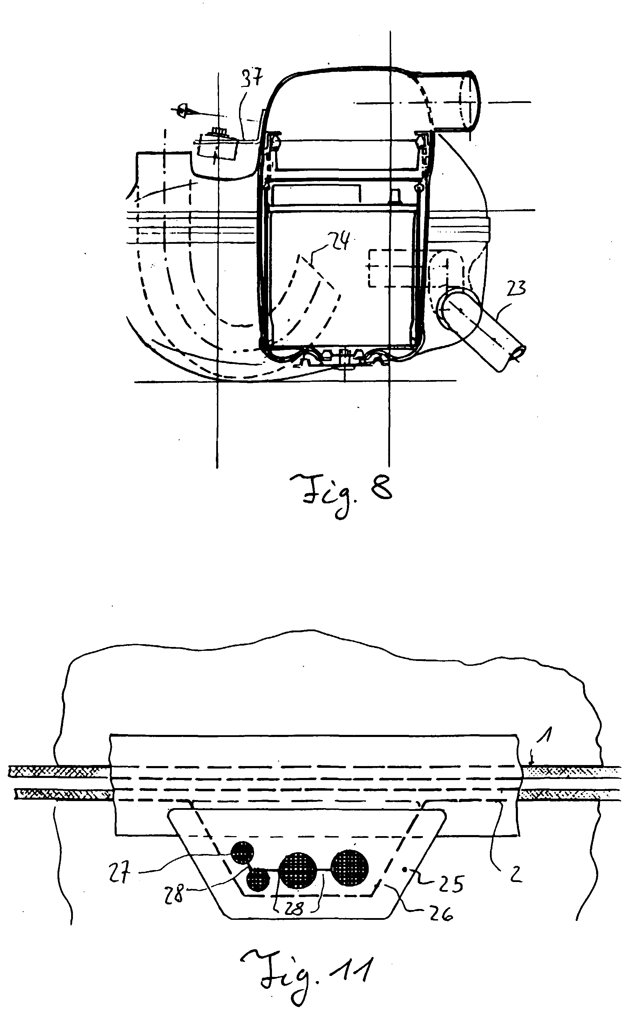

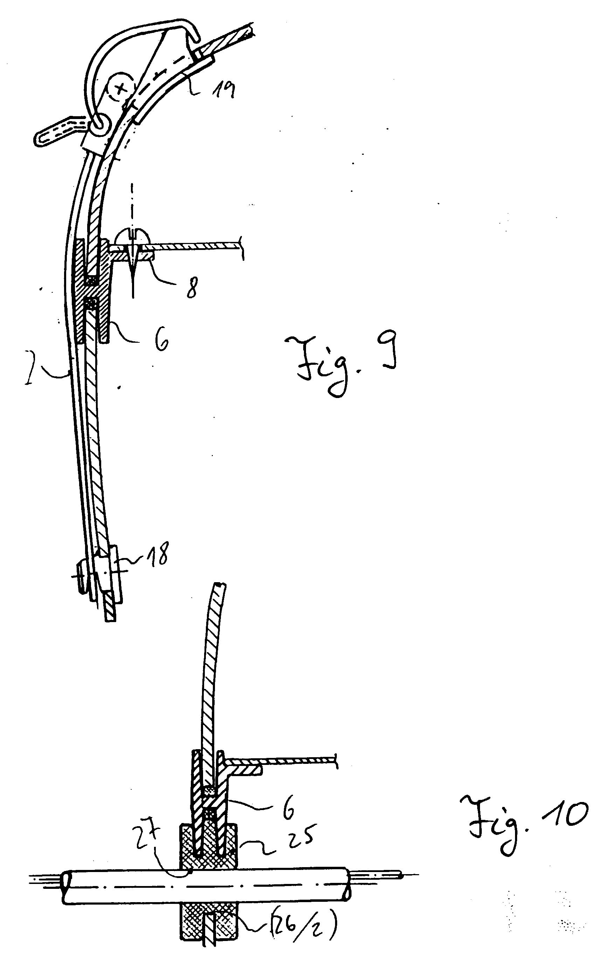

Eine alternative bevorzugte Ausführungsform eines Dämpferfilters 200 für einen erfindungsgemäßen Kraftfahrzeug-Aggregateraum ist aus Fig. 6 bis 13 ersichtlich. Hier teilt eine Teilfuge im wesentlichen in der halben Höhe bzgl. des Dämpferfilter das Dämpferfiltergehäuse in eine Oberschale 101 und eine Unterschale 102. Die beiden Schalen sind bevorzugt als Spritzteile hergestellt. Eine Filterpatrone 103 wird nicht, wie in der vorherigen Ausführungsform gemäß Fig. 1 bis 5, in der Teilfuge des Gehäuses 1 eingeklemmt, sondern an einem extra im Oberteil 101 angebrachten Flansch 104 mit einem extra dafür bestimmten Befestigungskorb 105 befestigt. In der Teilfuge ist ferner ein Ring 106 vorgesehen, welcher die Oberschale 101 mit der Unterschale 102 fixiert und spaltfrei zur Umgebung bzw. Außenluft abdichtet. Die Oberschale 101 und Unterschale 102 werden durch Spannbänder 107 zusammengehalten (vgl. Fig. 7, 9 und 10). Der Ring 106 weist einen waagerecht liegenden Flansch 108 auf, der eine Montageplatte 109 trägt, auf die diverse elektr. Komponenten, wie beispielsweise eine Sicherungsbox 113, ein Motorsteuergerät 110, ein Getriebesteuergerät 111, eine Kühler-Lüfter-Steuergerät 112 aufgeclipst sind. Ferner sind zur Halterung von Komponenten und zur Versteifung diverse Querspanten 114, 115, 116) und Längsspanten 117vorgesehen, welche zwecks Schall- und Luftfluktuation gelocht sind, und die in der Mitte einen Kasten mit u"ngelochten" Wänden 121 fixieren, in den die Batterie 122 anordbar ist. Die Luft im Dämpferfilter 200 ist somit hermetisch von der Batterie 122 abgeschottet.

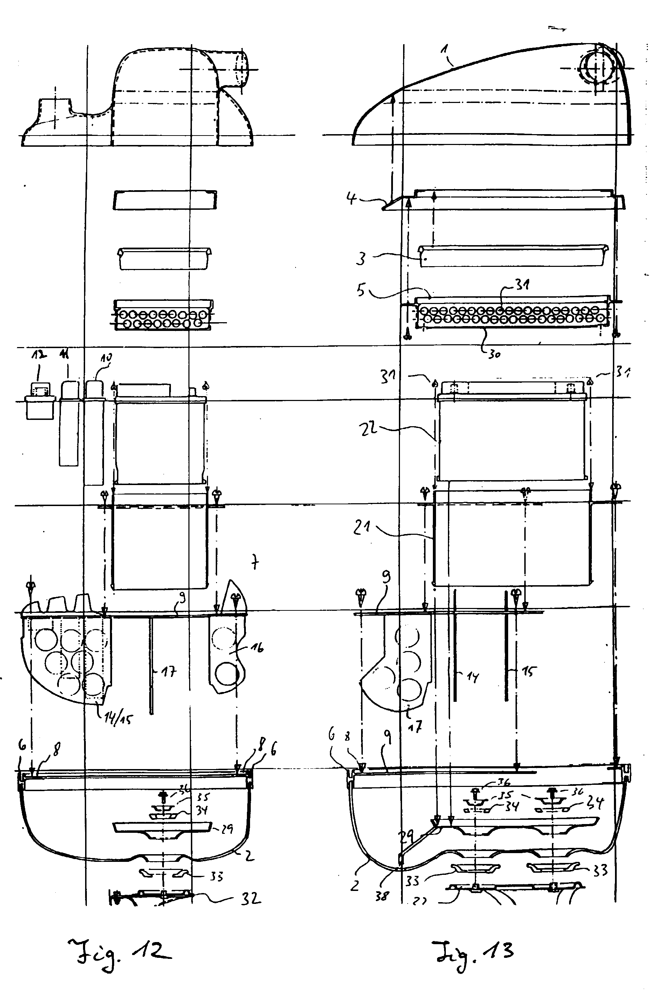

Durch eine Ausbildung der Oberschale 101 und der Unterschale 102 als Spritzteile sind filigraner Strukturen in diesen herstellbar. Das hat die Vorteile, daß die Wände steifer und somit akustisch stabiler sind und daß diverse Einzelteile in den Schalen integrierbar sind. So ist beispielsweise der Ring 106 an der Oberschale 101 oder der Unterschale 102 angespritzt. Der Flansch 104 zur Befestigung der Filterpatron 103 ist in der Oberschale 101 integrierbar. Die Quer- 114, 115, 116 und Längsspanten 117 können teilweise berücksichtigt werden. Befestigungselemente 118, 119 (Fig. 9) für die Spannbänder (18,19) sind beispielsweise an den Schalen 101, 102 angespritzt. Durch die Trennung des Befestigungsflansches 104, 105 für die Filterpatrone 103 von der Teilfuge ist der vorhandene Bauraum über dem Getriebe besser ausgenutzt. Die Teilfuge ist bevorzugt in alle Winkel und Ecken hinein geführt und nicht mehr von der fertigungsbedingten, rechteckigen Form der Filterpatron 103 abhängig. Das Dämpferfiltervolumen wird optimal groß. Die Filterpatrone 103 ist beispielsweise ihrerseits an die neue Form des Dämpferfilters 200 angepaßt und kann damit größer ausgebildet sein. Sie kann z.B. gewölbt ausgebildet und über der Batterie angeordnet sein, wie mit 120 in Fig. 6 angedeutet.

Konventionelle Verschlußmechanismen zwischen der Ober- und Unterschale 101, 102 wären mit der Hand zum Öffnen und Schließen schwer erreichbar, weil sie tief unten in der Teilfugenebene angebracht und von angrenzenden Teilen verdeckt wären. Durch die erfindungsgemäß vorgesehenen Spannbänder 107 kann der Verschlußmechanismus quasi oben auf die Oberschale 101 angebracht werden, was eine Montage/Demontage erleichtert. Ferner umfassen die Spannbänder eine große Strecke vom Dämpferfil-terumfang und drücken beim Schließen die großen Dämpferfilterflächen gegen die im Innern vorhandenen Spanten 114, 115, 116, 117. Dadurch sind die großen Dämpferfilterflächen akustisch stabil.

Um trotz der bombierten Dämpferfiltergehäusewände plane Befestigungsebenen für Batterie 122 und andere Komponenten innerhalb des Dämpferfilters 200 zur Verfügung zu stellen ist eine Montageplatte 109 vorgesehen. Bei der durch die erfindungsgemäße Ausgestaltung des Dämpferfiltere 200 mit der Teilung vereinfachte Montage werden nacheinander Luftansaugstrecken für warm 123 und kalt 124 eingelesen und durch die Spanten 114 bis 117) fixiert. Anschließend wird die Montageplatte 109 aufgelegt und es werden alle elektr. Komponenten eingeclipst.

Erfindungsgemäß ergibt sich ferner eine vereinfachte Kabelverlegung bei der zweiten Ausführungsform des Dämpferfilters 200, wie insbesondere aus Fig. 10 und 11 ersichtlich. Die Kabel 141 sind durch nicht dargestellte Halteclipse auf der Montageplatte befestigt. Dazu sind die Kabel 141 direkt durch die Teilfuge geführt, ohne ein Buchse gemäß der ersten Ausführungsform 100 vorzusehen. Zu diesem Zweck ist in der Teilfuge ein Gummiblock 125 vorgesehen, der in eine Kerbe 126 der Unterschale 102 oder auch der Oberschale 101 gesteckt ist. Der Gummiblock 125 ist mit Bohrungen 127 zur Durchführung der Kabel 141 versehen, wobei von Bohrung 127 zu Bohrung 127 der Gummiblock 125 einen oder mehrere Schlitze 128 aufweist, damit die Kabel 141 einfach durch den Gummiblock 125 gezogen werden können. Beim Zusammendrücken der Ober- mit der Unterschale 101, 102 mittels der Spannbänder 107 wird der Gummiblock 125 zusammengepreßt und damit die Kabeldurchführung luftdicht zusammengedrückt.

Die Unterbringung der Batterie 122 im Dämpferfilter 200 bringt die Gefahr mit sich, daß eventuell auslaufende Schwefelsäure den Motor beschädigen könnte. Um dieser Gefahr entgegenzuwirken, ist die Batterie 122 durch einen Kasten 121) mit "'ungelochten" Wänden umgeben. Dieser Kasten 121 wird über die Batterie 122 gestülpt und bis auf ein Halteblech 129 für die Batterie 122 abgesenkt. Das Halteblech bekommt damit eine zweite Bedeutung und dient zusätzlich als Boden für den Kasten 121. Ein Deckel 30 für diesen Kasten 121 ist durch den Befestigungskorb 105 für die Filterpatrone 103 ausgebildet. Der Korb 105 ist seitlich mit einer Lochung 131 versehen, damit die Ansaugluft hindurch fließen kann. Unten hat der Korb 105 eine ungelochte Fläche 30, die den Kasten 121 mit Batterie 122 von oben wie ein Deckel verschließt. Zwecks Abdichtung ist oben am Kastenrand zusätzlich Dichtung 131 aufgesetzt. Damit ggf. auslaufende Schwefelsäure aus dem Dämpferfilter 200 abfließen kann, ist das Halteblech 129 als Auffangwanne konstruiert und mit einem Abflußrohr 138 versehen, wie aus Fig. 6 und 13 ersichtlich. Dieses Abflußrohr ist durch eine Bohrung an der tiefsten Stelle der Unterschale 102 nach außen geführt.

Nachfolgend wird unter Bezugnahme auf Fig. 12 und 13 die Befestigung des Dämpferfilters 200 als Trägermodul erläutert. Zur akustischen Abkopplung des Trägermoduls von der Karosserie ist eine einer herkömmlichen Batteriekonsole ähnliche Halterung 132 vorgesehen, welche dieselben Anschraubpunkte an der Karosserie verwendet wie die herkömmliche Batteriekonsole, wobei auf der Halterung 132 zusätzlich zwei Gummilager plaziert sind. Die Montage beginnt mit dem Auflegen von zwei (unteren) Gummiringen 133 auf die Halterung 132, bevor die Unterschale 102 aufgesetzt wird. Um die Unterschale 102 zu befestigen, wird von oben in die Unterschale 102 hinein das Batterie-Halteblech 129 und darauf zwei weitere (obere) Gummiringe 134) mit jeweils einer Endscheibe 135 gelegt. Der ganze Verbund wird von oben durch zwei Sechskantschrauben 136) mit der Halterung 132 zusammengeschraubt und damit luftdicht zusammengedrückt. Damit das Trägermodul 200 durch die Anregungen vom Motoransaugschlauch nicht auf der Halterung 132 hin- und herwackelt, ist an der Oberschale 101 noch ein Gummi-Rundlager 137 befestigt, über welches das Trägermodul 200 oben an einem Federbeindom abgestützt ist.

## Patentansprüche

1. Kraftfahrzeug-Aggregateraum mit einem Dämpferfilter (100; 200), welches eine Filterpatrone (5; 103, 120) aufnimmt, **dadurch gekennzeichnet**, daß das Dämpferfilter (100; 200) als wenigstens zweiteiliges Trägermodul (1, 2; 101; 102) mit Aufnahme- und Befestigungsvorrichtungen (8, 40; 109, 121, 114 bis 117) für elektrische (7, 27, 28, 29; 110, 111, 112, 113, 122) und/oder mechanische Bauteile (31, 37, 38, 39; 123, 124) ausgebildet ist.

2. Kraftfahrzeug-Aggregateraum nach Anspruch 1, **dadurch gekennzeichnet**, daß wenigstens ein Teil (1, 2; 101,102) des Dämpferfilters (100, 200) als Blasteil oder als Spritzgußteil ausgebildet ist.

3. Kraftfahrzeug-Aggregateraum nach Anspruch 1 oder 2, **dadurch gekennzeichnet**, daß Dämpferfilterflächen des Dämpferfilters (100, 200) wenigstens teilweise bombiert ausgebildet sind.

4. Kraftfahrzeug-Aggregateraum nach einem der vorhergehenden Ansprüche, **dadurch gekennzeichnet**, daß der Dämpferfilter (100) einen Deckel (1) als erstes Teil umfaßt, welcher auf eine Öffnung in einem Gehäuse (2) des Dämpferfilters (100) als zweites Teil paßt und diese Öffnung dicht verschließt.

5. Kraftfahrzeug-Aggregateraum nach Anspruch 4, **dadurch gekennzeichnet**, daß in der Öffnung des Gehäuses (2) des Dämpferfilters (100) ein Flansch (4) zum Haltern der Filterpatrone (5) ausgebildet ist.

6. Kraftfahrzeug-Aggregateraum nach Anspruch 4 oder 5, **dadurch gekennzeichnet**, daß der Deckel (1) des Dämpferfilters (100) einen Stutzen zum Verbinden mit einem Ansaugschlauch (17) einer Saugseite einer in dem Kraftfahrzeug-Aggregateraum angeordneten Brennkraftmaschine aufweist.

7. Kraftfahrzeug-Aggregateraum nach Anspruch 4 bis 6, **dadurch gekennzeichnet**, daß im Bereich der Öffnung zusätzlich ein Gegenflansch (6) auf das Gehäuse (2) des Dämpferfilters (100) aufgepfropft ist.

8. Kraftfahrzeug-Aggregateraum nach Anspruch 6, **dadurch gekennzeichnet**, daß oben am Gegenflansch (6) ein Rundlager (15) angeordnet ist, welches mit einem Federbeindom (16) im Kraftfahrzeug-Aggregateraum verbunden ist.

9. Kraftfahrzeug-Aggregateraum nach einem der vorhergehenden Ansprüche, **dadurch gekennzeichnet**, daß das Trägermodul (1, 2) auf einer konventionellen Batteriehalterung (8) angeordnet ist.

10. Kraftfahrzeug-Aggregateraum nach Anspruch 9, **dadurch gekennzeichnet**, daß das Trägermodul (1, 2) auf der Batteriehalterung (8) mittels einer Gummilagerung (10, 11) befestigt ist.

11. Kraftfahrzeug-Aggregateraum nach einem der vorhergehenden Ansprüche, **dadurch gekennzeichnet**, daß eine Buchse (18, 19) zum Befestigen in einer Öffnung einer Wandung des Dämpferfilters (100) vorgesehen ist, wobei die Buchse Halbschalen (18, 19) umfaßt, die zwischen sich einen drei- oder mehrteiligen Gummiblock (21, 22, 23) einklammern, welcher Kabeldurchführungsöffnungen aufweist.

12. Kraftfahrzeug-Aggregateraum nach Anspruch 11, **dadurch gekennzeichnet**, daß eine Schraube (20) zum Zusammenhalten der Halbschalen (18, 19) derart vorgesehen ist, daß beim Anziehen der Schraube (20) der Gummiblock (21, 22, 23) zusammengedrückt ist.

13. Kraftfahrzeug-Aggregateraum nach Anspruch 11 oder 12, **dadurch gekennzeichnet**, daß die Buchse (18, 19) wenigstens ein Federelement (24, 25) derart aufweist, daß sich dieses nach Einschieben der Buchse (18, 19) in die Öffnung des Trägermoduls (1, 2) derart verformt und an einem Umfang der Öffnung abstützt, daß ein dem Einschieben entgegengesetztes Herausziehen der Buchse (18, 19) aus der Öffnung blockiert ist.

14. Kraftfahrzeug-Aggregateraum nach Anspruch 11 bis 13, **dadurch gekennzeichnet**, daß um den in der Öffnung der Wandung des Trägermoduls (1, 2) umlaufenden, äußeren Rand der Buchse (18, 19) herum wenigstens eine Dichtung (26), insbesondere in Form eines Dichtringes, angeordnet ist.

15. Kraftfahrzeug-Aggregateraum nach einem der vorhergehenden Ansprüche, **dadurch gekennzeichnet**, daß die Aufnahme- und Befestigungsvorrichtungen für ein jeweiliges Bauteil eine der Kontur des Bauteils entsprechende Ausnehmung in einer Wandung des Dämpferfilters (100; 200) mit randseitig an diesen Ausnehmungen ausgebildeten Clip-bzw. Rastnasen umfassen.

16. Kraftfahrzeug-Aggregateraum nach einem der vorhergehenden Ansprüche, **dadurch gekennzeichnet**, daß in dem Dämpferfilters (100; 200) eine Luftansaugstrecke (30; 123) für Kaltluft und/oder eine Luftansaugstrecke (37; 124) für Warmluft angeordnet ist.

17. Kraftfahrzeug-Aggregateraum nach einem der vorhergehenden Ansprüche, **dadurch gekennzeichnet**, daß eine am Dämpferfilter (100) außenseitig angeordnete Befestigungsvorrichtung (40) für eine Klimaleitung (39) vorgesehen ist.

18. Kraftfahrzeug-Aggregateraum nach einem der vorhergehenden Ansprüche, **dadurch gekennzeichnet**, daß der Dämpferfilter (200) mit einer Trennfuge auf etwa halber Höhe desselben ausgebildet ist, welche den Dämpferfilter (200) in eine Oberschale (101) und eine Unterschale (102) teilt.

19. Kraftfahrzeug-Aggregateraum nach Anspruch 18, **dadurch gekennzeichnet**, daß im Oberteil (101) des Dämpferfilter (200) ein zusätzlicher Flansch (104) sowie ein zusätzlicher Befestigungskorb (105) für die Filterpatrone (103) vorgesehen sind.

20. Kraftfahrzeug-Aggregateraum nach Anspruch 18 oder 19, **dadurch gekennzeichnet**, daß in der Trennfuge des Dämpferfilters (200) ein Ring (106) angeordnet ist, welcher die Oberschale (101) und die Unterschale (102) aneinander fixiert und gegeneinander spaltfrei zur Umgebung abdichtet.

21. Kraftfahrzeug-Aggregateraum nach Anspruch 20, **dadurch gekennzeichnet**, daß der Ring (106) einstückig mit der Oberschale (101) oder der Unterschale (102) ausgebildet ist.

22. Kraftfahrzeug-Aggregateraum nach einem der Ansprüche 20 oder 21, **dadurch gekennzeichnet**, daß am Ring (6) eine sich in einen Innenraum des Dämpferfilters (200) erstreckender Flansch (108) ausgebildet ist, welcher eine Montageplatte (109) trägt.

23. Kraftfahrzeug-Aggregateraum nach Anspruch 22, **dadurch gekennzeichnet**, daß die mit Aufnahme- und Befestigungsvorrichtungen wenigstens teilweise auf der Montageplatte (109) ausgebildet sind.

24. Kraftfahrzeug-Aggregateraum nach Anspruch 22 oder 23, **dadurch gekennzeichnet**, daß an der Montageplatte (109), insbesondere einstückig mit dieser, Querspanten (114, 115, 116) und/oder Längsspanten (117) angeordnet sind.

25. Kraftfahrzeug-Aggregateraum nach Anspruch 24, **dadurch gekennzeichnet**, daß die Querspanten (114, 115, 116) und/oder Längsspanten (117) wenigstens teilweise gelocht ausgebildet sind.

26. Kraftfahrzeug-Aggregateraum nach einem der Ansprüche 22 bis 25, **dadurch gekennzeichnet**, daß auf der Montageplatte (109) ein Kasten (121) mit durchgehenden Wänden zur Aufnahme einer Batterie (122) angeordnet ist.

27. Kraftfahrzeug-Aggregateraum nach Anspruch 26, **dadurch gekennzeichnet**, daß der Kasten einen bodenseitigen Ablauf (138) aufweist.

28. Kraftfahrzeug-Aggregateraum nach Anspruch 26 oder 27, **dadurch gekennzeichnet**, daß der Kasten (121) bodenseitig von einem Halteblech (129) für die Batterie (122) abgeschlossen ist.

29. Kraftfahrzeug-Aggregateraum nach einem der Ansprüche 18 bis 28, **dadurch gekennzeichnet**, daß in der Trennfuge zusätzlich ein Gummiblock (125) mit Durchgangsbohrungen (127) in einer Kerbe der Trennfuge angeordnet ist.

30. Kraftfahrzeug-Aggregateraum nach einem der Ansprüche 18 bis 29, **dadurch gekennzeichnet**, daß seitlich am Dämpferfilters (200) die Trennfuge übergreifend wenigstens ein Spannband (118, 119) vorgesehen ist, welches die Oberschale (101) und die Unterschale (102) zusammenhält.

31. Kraftfahrzeug-Aggregateraum nach Anspruch 30, **dadurch gekennzeichnet**, daß an der Oberschale (101) und an der Unterschale (102) entsprechende Befestigungselemente für die Spannbänder (118, 119), insbesondere einstückig, angeordnet sind.

32. Kraftfahrzeug-Aggregateraum nach einem der vorhergehenden Ansprüche, **dadurch gekennzeichnet**, daß die Aufnahme- und Befestigungsvorrichtungen eine Batteriehalterung (8), eine Befestigungsvorrichtung (40) für eine Klimaleitung (39), eine Montageplatte (109) für eine Batterie (122), einen Kasten (121) für eine Batterie (122), Querspanten (114 bis 116) und/oder Längsspanten (117) umfassen.

33. Kraftfahrzeug-Aggregateraum nach einem der vorhergehenden Ansprüche, **dadurch gekennzeichnet**, daß die elektrischen Bauteile eine Batterie (7; 122), ein Motorsteuergerät (27; 110), ein Kühler-Lüfter-Steuergerät (28; 112), ein Getriebesteuergerät (111) und/oder einen Sicherungskasten (29; 113) umfassen.

34. Kraftfahrzeug-Aggregateraum nach einem der vorhergehenden Ansprüche, **dadurch gekennzeichnet**, daß die mechanische Bauteile eine Ansaugstrecke für Kaltluft (31; 123), eine Ansaugstrecke für Warmluft (37; 124), einen Mechanismus für eine Warmluftansaugung (38) und/oder eine Klimaleitung (39) umfassen.
